# EUROPEAN PATENT SPECIFICATION

(11) **EP 2 236 393 B1**
(45) Date of publication and mention of the grant of the patent: **16.02.2011**
(21) Application number: 10157601.5
(22) Date of filing: 24.03.2010
(51) Int. Cl.: B62D 7/14

(54) **Rear wheel toe angle control system**
System zur Steuerung des Hinterradspurwinkels
Système de contrôle d'angle de pincement de roue arrière

(30) Priority: 30.03.2009 JP 2009082321
(43) Date of publication of application: 06.10.2010
(73) Proprietor: Honda Motor Co., Ltd., Tokyo 107-8556 (JP)
(72) Inventor: Yanagi, Takashi, Saitama 351-0193 (JP); Imafuku, Hideki, Saitama 351-0193 (JP)
(74) Representative: Trossin, Hans-Jürgen

(56) References cited:
- EP-A1- 0 463 310
- US-A- 4 953 649
- US-A- 5 014 801

## Description

### TECHNICAL FIELD

The present invention relates to a rear wheel toe angle control system for a vehicle such as a motor vehicle, and in particular to a rear wheel toe angle control system equipped with a novel fail safe feature that is activated upon failure of a sensor.

### BACKGROUND OF THE INVENTION

A rear wheel toe angle control system (RTC system) controls the rear wheel toe angle according to the vehicle speed, front wheel steering angle, braking condition and other operating conditions of the vehicle so that the yaw response or heading response of the vehicle may be improved at low speeds and the motion stability of the vehicle may be improved at high speeds. See US 4953649, Japanese patent laid open publication No. 9-30438 and Japanese patent laid open publication No. 2008-55921, for instance.

In such a system, in case of a failure of a sensor such as a front wheel steering angle sensor, it has been proposed to incorporate a fail safe feature that neutralizes the rear wheel toe angle or to reduce the rear wheel toe angle to zero as soon as the failure is verified.

However, when the fail safe feature is initiated to put the toe angle to zero while the vehicle is cornering, the simultaneous progress in the fail safe action and cornering action may cause an unfamiliar feeling or an undesired stress to the vehicle operator. Therefore, it would be desirable to execute the action to neutralize the rear wheel toe angle in an adequately gradual manner.

However, such a gradual neutralization may not be necessarily acceptable to the vehicle operator, and may unduly demand the patience of the vehicle operator. For instance, owing to a failure of the sensor, the vehicle operator may be able to maintain a straight course only by turning the steering wheel away from the neutral position by a certain angle, and a persistence of this condition for more than a certain time period may cause a discomfort to the vehicle operator. Thus, there is a dilemma as to how gradual the fail safe action should proceed. The vehicle operator experiences discomfort either if it is gradual or rapid.

### BRIEF SUMMARY OF THE INVENTION

In view of such a problem of the prior art, a primary object of the present invention is to provide a rear wheel toe angle control system provided with an improved fail safe feature against a sensor failure which minimizes the influences of the sensor failure on the system while minimizing discomfort to the vehicle operator during the progress of a fail safe action.

According to the present invention, such an object can be accomplished by providing a rear wheel toe angle control system for a four wheeled vehicle, comprising a first sensor (51) for detecting an operating condition of the vehicle, a target rear wheel toe angle setting unit (22) for setting a target rear wheel toe angle according to an output of the first sensor, an actuator (40) for steering rear wheels of the vehicle, and a control unit (23, 24, 25) that actuates the actuator so as to make an actual rear wheel toe angle agree with the target rear wheel toe angle, characterized by that: the control system further comprises a sensor failure detecting unit (27) for detecting a failure of the first sensor and a cornering detecting unit (28) for detecting a cornering maneuver of the vehicle by using a second sensor other than the first sensor, and upon detection of a sensor failure by the sensor failure detecting unit, the control unit maintains a current target rear wheel toe angle while the vehicle is cornering, and reduces the target rear wheel steering angle substantially to zero upon completion of the cornering of the vehicle.

Thus, upon detection of a failure of the first sensor, a fail safe action of canceling, reducing or otherwise neutralizing the rear wheel toe angle is not effected while the vehicle is cornering, and is initiated only upon completion of the cornering of the vehicle. Thereby, the vehicle operator is not discomforted or otherwise disturbed by the fail safe action while the vehicle is cornering, but once the cornering is concluded, the fail safe action can be effected at a relatively rapid rate without causing any disturbance to the motion of the vehicle or discomforting the vehicle operator.

According to a preferred embodiment, the first sensor comprises at least a member selected from a group consisting of a front wheel steering angle sensor (51), a vehicle speed sensor (52), a yaw rate sensor (55), an accelerator pedal sensor (56), a brake pedal sensor (57) and a lateral acceleration sensor (58), and the second sensor comprises at least a member selected from a group consisting of a steering torque sensor (53), a front wheel steering angle sensor (51), a yaw rate sensor (55) and a lateral acceleration sensor (58) which is other than the first sensor.

### BRIEF DESCRIPTION OF THE DRAWINGS

Now the present invention is described in the following with reference to the appended drawings, in which:
Figure 1 is a schematic diagram of a four wheeled vehicle incorporated with a rear wheel toe angle control system embodying the present invention;
Figure 2 is a block diagram of a control system of the rear wheel toe angle control system; and
Figure 3 is a flowchart showing a control routine of the rear wheel toe angle control system.

### DETAILED DESCRIPTION OF THE PREFERRED EMBODIMENTS

A rear wheel toe angle control system embodying the present invention is now described in the following with reference to the appended drawings. In the following description, the component parts associated with each wheel are denoted, in some places, with numerals including a suffix such as R and L indicating on which side the particular component is located, but in other places without a suffix to collectively denote the particular component parts.

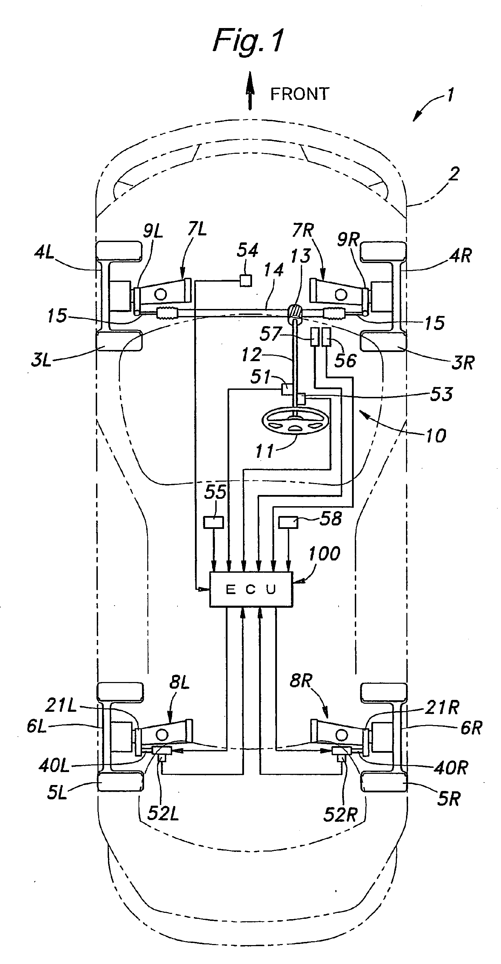

Referring to Figure 1 illustrating a four wheeled vehicle 1 incorporated with a rear wheel steering system embodying the present invention, the vehicle 1 comprises a pair of front wheels 4L and 4R each fitted with a pneumatic tire 3L, 3R, and a pair of rear wheels 6L and 6R each fitted with a pneumatic tire 5L, 5R, and these wheels are supported by a vehicle body 2 via corresponding knuckles 9L, 9R, 21L and 21R and wheel suspension units 7L, 7R, 8L and 8R, respectively.

The vehicle 1 is provided with a front wheel steering system 10 that allows the front wheels 4 to be directly steered by turning a steering wheel 11. The front wheel steering system 10 comprises a steering shaft 12 connected to the steering wheel 11, a pinion 13 fixed to a lower end of the steering shaft 12 and a rack shaft 14 extending laterally and provided with rack teeth which mesh with the pinion 13. The rack shaft 12 is supported so as to be moveable along the lengthwise direction thereof, and has two ends that are connected to the corresponding knuckles 9L and 9R, respectively. Thus, the steering movement of the front wheels 4 is accomplished by the lateral movement of the rack shaft 14 which is in turn caused by the turning of the steering wheel 11.

The steering shaft 12 is fitted with a steering angle sensor 51 which detects the angular position of the steering wheel 11 as a measure of the actual steering angle of the front wheels. In the following description, it should be understood that the steering angle sensor 51 produces a sensor signal that corresponds to the actual steering angle of the front wheels 4. The steering shaft 12 is additionally fitted with a steering torque sensor 53 that detects the steering torque or the torque applied to the steering shaft 12 by a vehicle operator turning the steering wheel 11.

The vehicle 1 is provided with a left electric actuator 40L having a first end connected to the vehicle body 2 and a second end connected to the knuckle 21L of the left rear wheel 6L for controlling the left rear wheel toe angle, and a right electric actuator 40R having a first end connected to the vehicle body 2 and a second end connected to the knuckle 21R of the right rear wheel 6R for controlling the right rear wheel toe angle. Each electric actuator 40 includes an electric motor and a feed screw mechanism connected to an output shaft of the electric motor so that the rotation of the output shaft causes an output rod (second end) of the actuator 40 to extend and retract as desired, and this extending and retracting movement of the output rod causes the toe angle of the corresponding rear wheel to be changed in a corresponding manner.

Each electric actuator 40 is fitted with a stroke sensor 52 for detecting an actual stroke of the output rod thereof.

The vehicle 1 is additionally provided with a vehicle speed sensor 54 for detecting the traveling speed of the vehicle 1, a yaw rate sensor 55 for detecting a yaw rate of the vehicle, an accelerator pedal sensor 56 for detecting a depressing stroke of an accelerator pedal, a brake pedal sensor 57 for detecting a depressing stroke of a brake pedal and a lateral acceleration sensor (lateral G sensor) 58 for detecting a lateral acceleration of the vehicle 1.

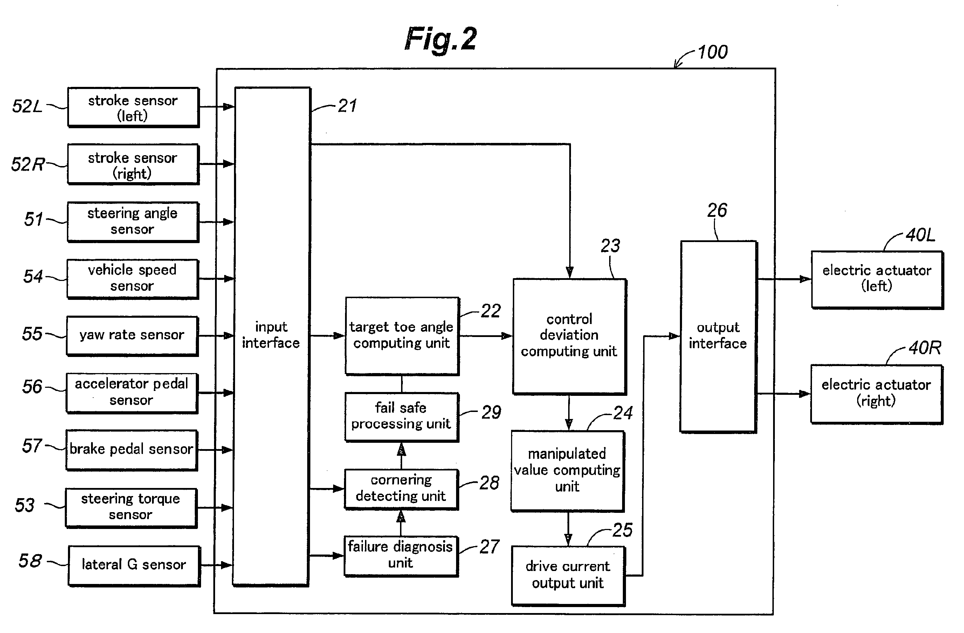

Each electric actuator 40 is controlled by a rear wheel steering control unit (ECU) 100 which essentially consists of a microcomputer. As illustrated in Figure 2, the rear wheel steering control unit 100 includes an input interface 21 for receiving sensor signals from the various sensors, a target toe angle computing unit 22, a control deviation computing unit 23, a manipulated value computing unit 24, a drive current output unit 25, an output interface 26, a failure diagnosis unit 27, a cornering detecting unit 28 and a fail safe processing unit 29.

The target toe angle computing unit 22 computes a target toe angle of each rear wheel as a normal control process according to the driving operation of the vehicle operator and operating condition of the vehicle such as a front wheel steering angle detected by the front wheel steering angle sensor 51, a vehicle speed detected by the vehicle speed sensor 52, a yaw rate detected by the yaw rate sensor 55, an accelerator depression detected by the accelerator pedal sensor 56, the brake pedal depression detected by the brake pedal sensor 57 and a lateral acceleration detected by the lateral G sensor 58, and this control process is executed according to a prescribed control rule. The target toe angle computing unit 22 converts the target doe angle of each rear wheel 6 into a target stroke of the corresponding electric actuator 40.

The control deviation computing unit 23 computes, for each electric actuator 40, a control deviation between the target stroke of the actuator computed by the target toe angle computing unit 22 and the actual stroke of the actuator detected by the corresponding stroke sensor 52.

The manipulated value computing unit 24 computes the manipulated value for each electric actuator 40 so that the control deviation of the electric actuator computed by the control deviation computing unit 23 may be minimized as a proportional feedback control of a prescribed gain. Thereby, the actual toe angle of the rear wheels 6 is controlled so as to follow or tract the target toe angle given at each moment. The drive current output unit 25 converts the manipulated value into an electric current value (or a duty ratio) of the electric current which is actually supplied to the actuator 40 via the output interface 26.

When the rear wheels 6 are steered in a symmetric pattern, the toe-in and toe-out of the rear wheels can be changed as desired. When the rear wheels 6 are steered in a same direction, the four wheel steering of the vehicle can be achieved. If the rear wheels are steered in an opposite phase relationship to the front wheels, the maneuverability of the vehicle can be improved particularly in low speed ranges. If the rear wheels are steered in a same phase relationship to the front wheels, the motion stability of the vehicle can be improved particularly in high speed ranges.

The failure diagnosis unit 27 carries out a diagnosis of the steering angle sensor 51 for detecting a steering angle of the front wheels that forwards a sensor output signal to the input interface 21 for the rear wheel toe angle control, according to a prescribed diagnosis procedure, and thereby detects a failure of the sensor. As a possible modification of this embodiment, the failure diagnosis unit 27 may diagnose at least a member selected from a group consisting of the front wheel steering angle sensor 51, vehicle speed sensor 52, yaw rate sensor 55, accelerator pedal sensor 56, brake pedal sensor 57 and lateral G sensor 58.

The cornering detecting unit 28 is activated when a failure of the steering angle sensor 51 is detected by the failure diagnosis unit 27, and detects a cornering maneuver of the vehicle by using a sensor other than the steering angle sensor 51. The steering torque sensor 53, yaw rate sensor 55 and/or lateral G sensor 58 may be used as a sensor for detecting a cornering maneuver of the vehicle. Typically, a cornering maneuver is detected when the output signal of the selected sensor has exceeded a prescribed threshold value. When the diagnosed sensor is other than the front wheel steering angle sensor 51, the front wheel steering angle sensor 51 may also be used as a sensor for detecting the cornering of the vehicle.

When a failure of the steering angle sensor 51 is detected, and a cornering maneuver is detected by the cornering detecting unit 28, the fail safe processing unit 29 forwards a command to the control target toe angle computing unit 22 so that the control target toe angle is maintained at the current value during the cornering maneuver, and upon completion of the cornering maneuver, the control target toe angle is set to zero. The neutralization of the rear wheel toe angle is thus initiated only after the cornering maneuver is completed. If appropriate, the neutralization of the rear wheel toe angle may be initiated as soon as the severity of the cornering maneuver has decline below a prescribed level which may be measured in terms of a lateral acceleration, yaw rate or steering torque, for instance.

Therefore, upon detection of a failure of the steering angle sensor 51, if the vehicle is cornering, the rear wheel toe angle is maintained at the current value, and is not neutralized. Therefore, the vehicle operator is not discomforted or otherwise disturbed by a neutralizing action of the rear wheel.

As the neutralizing action of the rear wheel toe angle control is initiated substantially upon completion of the cornering, the vehicle operator is not disturbed by the neutralizing action even when the neutralization or restoring of the rear wheel toe angle to zero is carried out at a relatively rapid rate. Therefore, according to the illustrated embodiment, in case of a sensor failure, the neutralization of the rear toe angle is completed in a relatively short period of time when appropriate such as when the vehicle is traveling straight ahead, and the neutralization of the rear toe angle is delayed or suspended in other times such as when the vehicle is cornering.

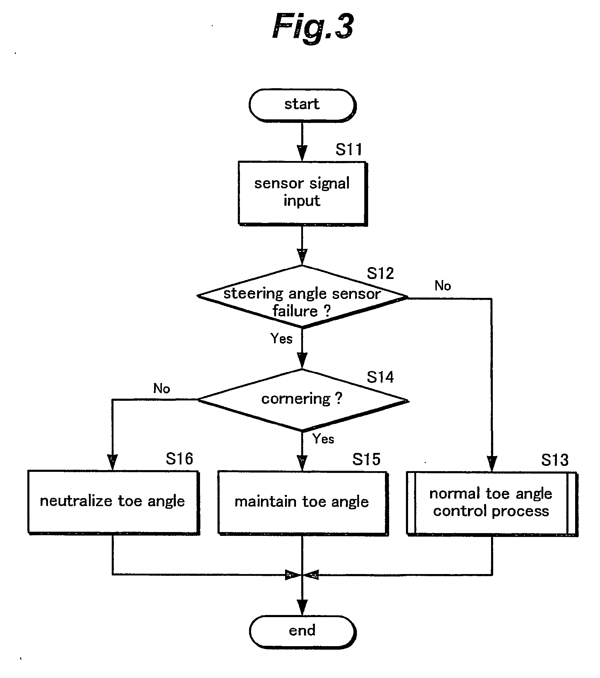

The control process of the rear wheel toe angle control system of the illustrated embodiment which is represented in the flowchart of Figure 3 is executed as an interrupt routine of a main control routine which is involved at a regular interval.

First of all, the control unit 100 receives sensor signals from the various sensors (step S11). A diagnosis of the steering angle sensor 51 is executed, and a failure of the steering angle sensor 51 is determined (step S 12). If no failure of the steering angle sensor 51 is detected, a normal toe angle control process is executed according to a prescribed normal rear wheel toe angle control rule (step S 13).

If a failure of the steering angle sensor 51 is detected, it is then determined if the vehicle is cornering (step S 14). A cornering of the vehicle can be detected by determining if an output of the steering torque sensor 53, yaw rate sensor 55 and/or lateral G sensor 58 has exceeded a prescribed threshold value. If the vehicle is cornering, the current rear wheel toe angle is maintained, and no action is taken to return the rear wheel toe angle to zero (step S 15).

On the other hand, if the vehicle is not cornering and traveling straight ahead or if the cornering of the vehicle has substantially ended, the rear wheel toe angle is reduced to zero at a prescribed rate (step S16).

Although the present invention has been described in terms of a preferred embodiment thereof, it is obvious to a person skilled in the art that various alterations and modifications are possible without departing from the scope of the present invention which is set forth in the appended claims.

Provided is a rear wheel toe angle control system for a four wheeled vehicle, comprising a first sensor (51) for detecting an operating condition of the vehicle, a target rear wheel toe angle setting unit (22) for setting a target rear wheel toe angle according to an output of the first sensor, an actuator (40) for steering rear wheels of the vehicle, a control unit (23, 24, 25) that actuates the actuator so as to make an actual rear wheel toe angle agree with the target rear wheel toe angle, a sensor failure detecting unit (27) for detecting a failure of the first sensor and a cornering detecting unit (28) for detecting a cornering maneuver of the vehicle by using a second sensor other than the first sensor. Upon detection of a sensor failure by the sensor failure detecting unit, the control unit maintains a current target rear wheel toe angle while the vehicle is cornering, and reduces the target rear wheel steering angle substantially to zero upon completion of the cornering of the vehicle. Thereby, the vehicle operator is not discomforted or otherwise disturbed by the fail safe action while the vehicle is cornering, but once the cornering is concluded, the fail safe action can be effected at a relatively rapid rate without causing any disturbance to the motion of the vehicle or discomforting the vehicle operator.

## Claims

1. A rear wheel toe angle control system for a four wheeled vehicle, comprising
a first sensor (51) for detecting an operating condition of the vehicle,
a target rear wheel toe angle setting unit (22) for setting a target rear wheel toe angle according to an output of the first sensor,
an actuator (40) for steering rear wheels of the vehicle, and
a control unit (23, 24, 25) that actuates the actuator so as to make an actual rear wheel toe angle agree with the target rear wheel toe angle, **characterized by** that:
the control system further comprises a sensor failure detecting unit (27) for detecting a failure of the first sensor and a cornering detecting unit (28) for detecting a cornering maneuver of the vehicle by using a second sensor other than the first sensor, and upon detection of a sensor failure by the sensor failure detecting unit, the control unit maintains a current target rear wheel toe angle while the vehicle is cornering, and reduces the target rear wheel steering angle substantially to zero upon completion of the cornering of the vehicle.

2. The rear wheel toe angle control system according to claim 1, wherein the first sensor comprises at least a member selected from a group consisting of a front wheel steering angle sensor (51), a vehicle speed sensor (52), a yaw rate sensor (55), an accelerator pedal sensor (56), a brake pedal sensor (57) and a lateral acceleration sensor (58).

3. The rear wheel toe angle control system according to claim 1, wherein the second sensor comprises at least a member selected from a group consisting of a steering torque sensor (53), a front wheel steering angle sensor (51), a yaw rate sensor (55) and a lateral acceleration sensor (58).

## Patentansprüche

1. Hinterradspurwinkelsteuerungssystem für ein vierrädriges Fahrzeug, umfassend:
einen ersten Sensor (51) zum Erfassen eines Betriebszustands des Fahrzeugs,
eine Soll-Hinterradspurwinkelsetzeinheit (22) zum Setzen eines Soll-Hinterradspurwinkels gemäß einer Ausgabe des ersten Sensors,
einen Aktuator (40) zum Lenken von Hinterrädern des Fahrzeugs, und eine Steuereinheit (23, 24, 25), die den Aktuator so betätigt, dass ein Ist-Hinterradspurwinkel mit dem Soll-Hinterradspurwinkel in Übereinstimmung gebracht wird, **dadurch gekennzeichnet, dass**:
das Steuerungssystem ferner eine Sensorfehlererfassungseinheit (27) zum Erfassen eines Fehlers des ersten Sensors sowie eine Kurvenerfassungseinheit (28) zum Erfassen eines Kurvenmanövers des Fahrzeugs unter Verwendung eines zweiten Sensors, der anders als der erste Sensor ist, aufweist, und bei Erfassung eines Sensorfehlers durch die Sensorfehlererfassungseinheit die Steuereinheit einen gegenwärtigen Soll-Hinterradspurwinkel beibehält, während das Fahrzeug eine Kurve fährt, und bei Abschluss der Kurvenfahrt des Fahrzeugs den Soll-Hinterradlenkwinkel im Wesentlichen auf null verringert.

2. Das Hinterradspurwinkelsteuerungssystem nach Anspruch 1, worin der erste Sensor zumindest ein Element aufweist, ausgewählt aus einer Gruppe bestehend aus einem Vorderradlenkwinkelsensor (51), einem Fahrzeuggeschwindigkeitssensor (52), einem Gierratensensor (55), einem Gaspedalsensor (56), einem Bremspedalsensor (57) und einem Querbeschleunigungssensor (58).

3. Das Hinterradspurwinkelsteuerungssystem nach Anspruch 1, worin der zweite Sensor zumindest ein Element aufweist, ausgewählt aus einer Gruppe bestehend aus einem Lenkdrehmomentsensor (53), einem Vorderradlenkwinkelsensor (51), einem Gierratensensor (55) und einem Querbeschleunigungssensor (58).

## Revendications

1. Système de contrôle d'angle de pincement de roue arrière pour un véhicule à quatre roues, comprenant
un premier capteur (51) pour détecter un état de fonctionnement du véhicule,
une unité de réglage d'angle de pincement de roue arrière cible (22) pour régler un angle de pincement de roue arrière cible en fonction d'une sortie du premier capteur,
un actionneur (40) pour diriger les roues arrière du véhicule, et
une unité de commande (23, 24, 25) qui actionne l'actionneur de manière à faire concorder un angle de pincement de roue arrière réel avec l'angle de pincement de roue arrière cible, **caractérisé en ce que** :
le système de contrôle comprend en outre une unité de détection de panne de capteur (27) pour détecter une panne du premier capteur et une unité de détection de virage (28) pour détecter une manoeuvre de virage du véhicule en utilisant un second capteur autre que le premier capteur, et lors de la détection d'une panne de capteur par l'unité de détection de panne du capteur, l'unité de contrôle maintient un angle de pincement de roue arrière cible actuel alors que le véhicule prend un virage et réduit l'angle de direction de la roue, arrière cible sensiblement à zéro lorsque le véhicule achève son virage.

2. Système de contrôle d'angle de pincement de roue arrière selon la revendication 1, dans lequel le premier capteur comprend au moins un élément choisi dans un groupe constitué par un capteur d'angle de direction de roue avant (51), un capteur de vitesse de véhicule (52), un capteur de vitesse de lacet (55), un capteur de pédale d'accélérateur (56), un capteur de pédale de frein (57) et un capteur d'accélération latérale (58) .

3. Système de contrôle d'angle de pincement de roue arrière selon la revendication 1, dans lequel le second capteur comprend au moins un élément choisi dans un groupe constitué par un capteur de couple de direction (53), un capteur d'angle de direction de roue avant (51), un capteur de vitesse de lacet (55) et un capteur d'accélération latérale (58).
